**Europäisches Patentamt**

**European Patent Office**

**Office européen des brevets**

(11) Veröffentlichungsnummer: **0 104 211**
**B1**

(12) **EUROPÄISCHE PATENTSCHRIFT**

(45) Veröffentlichungstag der Patentschrift:
**08.01.86**

(21) Anmeldenummer: **83901067.5**

(22) Anmeldetag: **29.03.83**

(86) Internationale Anmeldenummer:
**PCT/DE 83/00059**

(87) Internationale Veröffentlichungsnummer:
**WO 83/03405 (13.10.83 Gazette 83/24)**

(51) Int. Cl.⁴: **B 66 B 9/10, B 65 G 1/04**

(54) **VORRICHTUNG ZUR ZUSAMMENSTELLUNG VON MATERIALKOMMISSIONEN AUS IN EINER WABENREGALANLAGE EINGELAGERTEM LAGERGUT.**

(30) Priorität: **30.03.82 DE 3211596**

(43) Veröffentlichungstag der Anmeldung:
**04.04.84 Patentblatt 84/14**

(45) Bekanntmachung des Hinweises auf die Patenterteilung:
**08.01.86 Patentblatt 86/2**

(84) Benannte Vertragsstaaten:
**BE DE FR**

(56) Entgegenhaltungen:
**DE - A - 1 925 643**
**DE - C - 296 658**
**DE - C - 420 096**

(73) Patentinhaber: **Theobald, Adolf, Merschstrasse 5, D-5758 Fröndenberg-Warmen (DE)**

(72) Erfinder: **Theobald, Adolf, Merschstrasse 5, D-5758 Fröndenberg-Warmen (DE)**

(74) Vertreter: **Henfling, Fritz, Dipl.-Ing., Beurhausstrasse 7, D-4600 Dortmund 1 (DE)**

## Beschreibung

Die Erfindung betrifft eine Vorrichtung zur Zusammenstellung von Materialkommissionen aus in einer Wabenregalanlage eingelagertem Lagergut in Gestalt eines an einer Stirnseite des Regals an dem Regal entlang verfahrbaren Regalförderzeuges, auf dessen Hubtisch die das Lagergut enthaltenden Kassetten zur Materialentnahme überführt werden.

Wabenregale nehmen über- und nebeneinander Lagergut enthaltende Kassetten auf, die schubkastenartig in die Regale eingelagert bzw. aus den Regalen entnommen werden. Zur Beschickung und Entnahme (DE- A Nr. 1925643) dient ein am Regal entlang verfahrbares Regalförderzeug mit einem Hubtisch in Form eines Bedienungsstandes zum Anfahren der Regalfächer. Zum Kommissionieren, das heisst zur Zusammenstellung von abgerufenem Lagergut, werden bislang die das jeweilige Lagergut enthaltenden Kassetten mit Hilfe einer Bedienungsperson auf dem Regalförderzeug aus dem Regal entnommen und mittels eines an der Stirnseite des Regalförderzeuges mit dem Regalförderzeug verfahrbaren Paternosters mit einer Mehrzahl von Gondeln auf den Flur abgesenkt, wo die abgerufenen Materialmengen durch ein Förderband abgeführt und zur Kommission zusammengestellt werden. Das ist arbeits- und zeitaufwendig und für Langgut ungeeignet.

Ausgehend vom im vorausgehenden umrissenen Stand der Technik liegt der Erfindung die Aufgabe zugrunde, eine Vorrichtung zur Zusammenstellung von Materialkommissionen aus in einer Wabenregalanlage eingelagertem Lagergut, insbesondere auch Langgut, in einer Weise auszugestalten, die eine rationellere Kommissionierung zulässt.

Die Aufgabe wird mit einer Vorrichtung der eingangs umrissenen Art gelöst, bei der erfindungsgemäss dem dem Regalförderzeug zugekehrten Trum des Paternosters zusammen mit dem Hubtisch des Regalförderzeuges höhenverstellbare, das Trum zum Hubtisch hin auslenkende Auslenkschlitten zugeordnet sind.

Die Kommissionierung wird hierbei auf den Bestandteil des Regalförderzeuges bildenden, als Arbeitsbühne ausgelegten Hubtisch verlegt und sie erfolgt aus den aus dem Regal auf den Hubtisch überführten Kassetten in die Bestandteil des dem Regalförderzeug zugeordneten Paternosters bildenden Gondeln, und zwar jeweils in die gegen den Hubtisch hin ausgelenkte Gondel, die dann auch eine maschinelle Beschickung oder Entnahme von oben zulässt. Ohne grössere Transportwege können somit einerseits unterschiedliche, aus verschiedenen Kassetten zu entnehmende Lagergüter aufweisende Kommissionen in jeweils einer Gondel und andererseits eine Mehrzahl von Kommissionen in verschiedenen Gondeln gleichzeitig zusammengestellt werden. Das führt ersichtlich zu einer ganz erheblichen Reduzierung an Arbeits- und Zeitaufwand bei der Kommissionierung.

Ist an jeder Stirnseite des Regalförderzeuges ein Paternoster vorgesehen und sind die Paternoster lösbar mit dem Regalförderzeug verbunden, können die Paternoster im Wechsel eingesetzt werden, das heisst einer der Paternoster kann mit abgerufenem Lagergut beschickt werden, während aus dem zuvor beschickten, zur Übergabe an die Verladung überführten Paternoster das in ihm enthaltene kommissionierte Lagergut entnommen wird. Dazu ist es dann allerdings erforderlich, für die Auslenkschlitten am Paternoster Führungssäulen vorzusehen und die Auslenkschlitten mit dem Hubtisch koppelbar auszubilden. Ein lösbar mit dem Regalförderzeug verbundener Paternoster eröffnet auch die Möglichkeit, während der Entladung des mit kommissioniertem Lagergut beschickten Paternosters das Regalförderzeug zur erneuten Einlagerung von Lagergut einzusetzen.

Zur Erleichterung der Entnahme von in den Paternostergondeln befindlichem kommissioniertem Lagergut kann der Paternoster auch auf der vom Regalförderzeug abgekehrten Seite in Bodennähe mit einer in diesem Fall stationären Auslenkung versehen sein.

Eine lösbare Zuordnung der Gondeln zum Paternoster gestattet es, die Gondeln zumal an der Verladestation als Ganzes der Verladung zuzuführen.

Die Ausgestaltung des Bestandteil des Regalförderzeuges bildenden Hubtisches als Arbeitsbühne begrenzt die Hubhöhe des Hubtisches zwangsläufig in einer Weise, dass die obersten Fächer des Regals vom Hubtisch selbst nicht mehr angefahren werden können. Um gleichwohl den Zugang zu den obersten Regalfächern zu ermöglichen, ist in weiterer Ausgestaltung der Erfindung auf dem Hubtisch ein die vom Hubtisch selbst nicht mehr anfahrbaren Regalfächer in der oberen Endlage des Hubtisches überdeckender Fahrstuhl vorgesehen, in den die in diesen Regalfächern befindlichen Kassetten überführt und mit dem die Kassetten auf den Hubtisch zur Materialentnahme abgesenkt werden.

Für die Überführung der das Lagergut enthaltenden Kassetten in die Regale und für ihre Entnahme aus den Regalen bedient man sich bekannter, auf dem Hubtisch des Regalförderzeuges anzuordnender Beschickungs- und Entnahmevorrichtungen. Mit Laufrollen versehene Kassetten können natürlich auch von Hand bewegt werden.

In der Zeichnung ist die Erfindung an einem in schematischer Weise dargestellten Ausführungsbeispiel weitergehend erläutert. Es zeigen:

Fig. 1 eine teilweise dargestellte Wabenregalanlage mit der Kommissioniervorrichtung, insbesondere den dem Regalförderzeug zugeordneten Paternoster,

Fig. 2 die Kommissioniervorrichtung in Fig. 1 im Schnitt nach Linie II-II in Fig. 1.

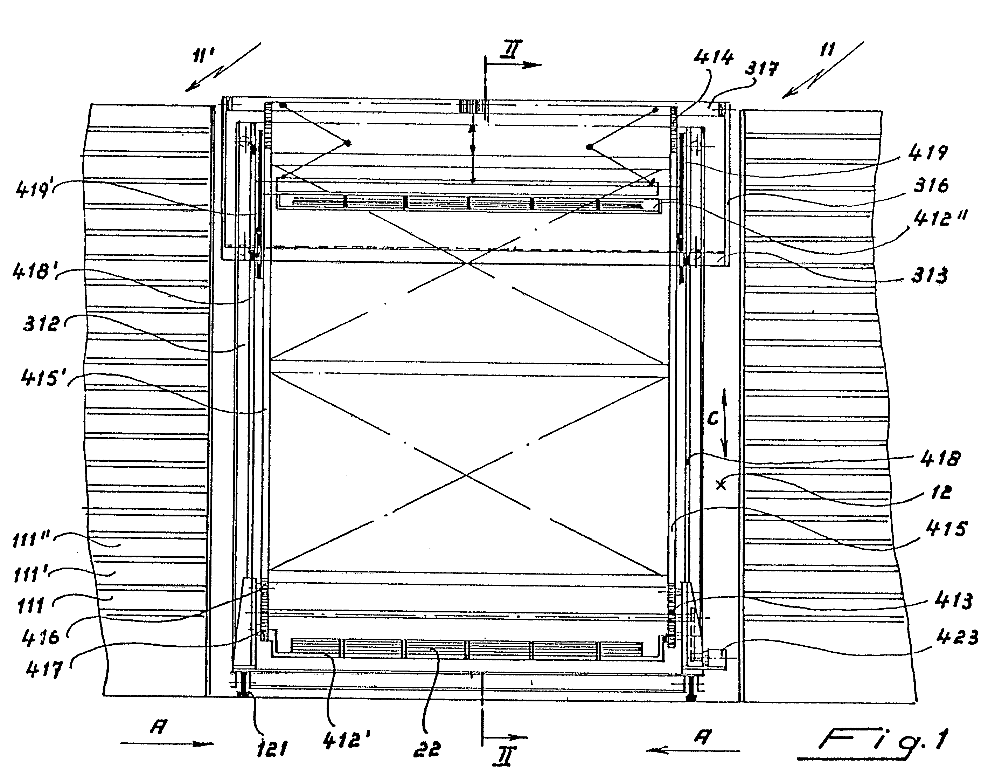

Die Wabenregalanlage besteht aus den im Abstand voneinander unter Bildung einer Gasse 12 aufgestellten Regalen 11 und 11', aus denen die in den Regalfächern 111, 111', 111"... eingelagerten, Lagergut 22 enthaltenden Behälter 21, sogenannte Kassetten, im Sinne der Pfeile A in Fig. 1 entnehmbar sind.

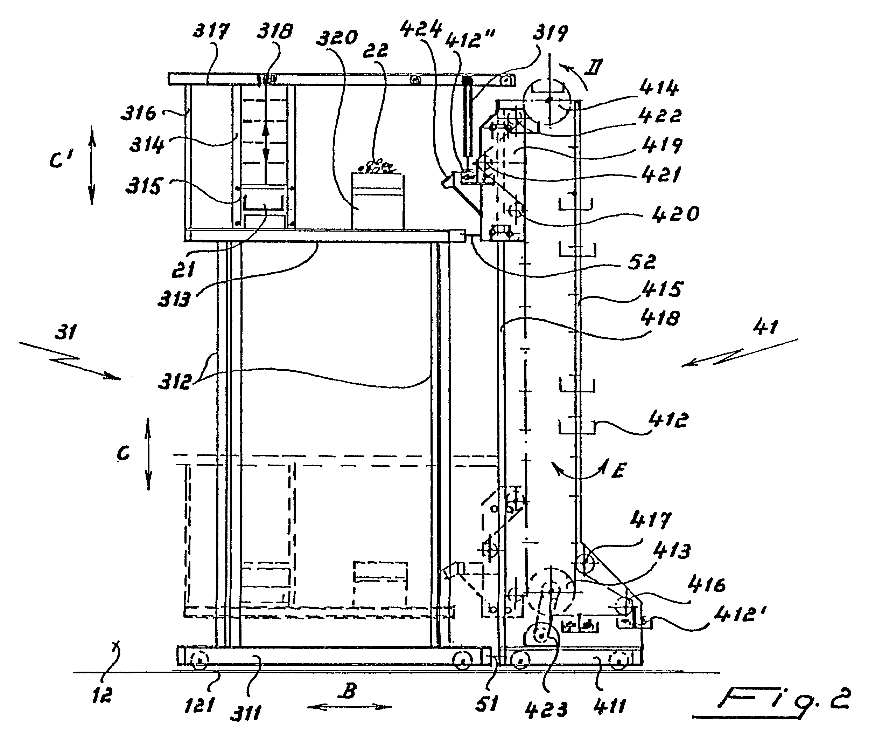

In der Gasse 12 ist ein schienengebundenes (121) Regalförderzeug 31 im Sinne des Doppelpfeiles B in Fig. 2 verfahrbar (fig. 2). Das Regalförderzeug 31 wird gebildet aus einem Fahrwerk 311 mit sich darauf über ein Hubwerk 312 abstützendem Hubtisch 313. Der Hubtisch 313 ist mittels des Hubwerks 312 im Sinne des Doppelpfeiles C in Fig. 2 höhenverstellbar. Mit dem die jeweiligen Regalfächer anfahrenden Regalförderzeug 31 werden die Lagergut 22 enthaltenden Kassetten 21 in die Regale 11, 11', das heisst in die jeweiligen Regalfächer 111, 111', 111'' ... eingelagert, gleichermassen werden Kassetten 21, aus denen Lagergut 22 entnommen werden soll, aus den Regalen 11, 11' auf das Regalförderzeug 31 zurück verlagert (Pfeile A in Fig. 1).

Nach der Erfindung ist an einer Stirnseite des Regalförderzeuges 31 ein ebenfalls schienengebundener (121) und dann auch im Sinne des Doppelpfeiles B in Fig. 2 verfahrbarer, mit einer Mehrzahl von Gondeln 412 bestückter Vertikal-Umlaufförderer 41, ein sogenannter Paternoster, vorgesehen, der mit dem Regalförderzeug 31 lösbar verbunden ist (51). Der Paternoster 41 ist aufgeständert auf einem Fahrwerk 411 und wird gebildet von um Umkehrräder 413, 414 geführten endlosen, im Sinne des Pfeiles D in Fig. 2 umlaufenden Ketten 415, 415', an denen die Gondeln 412 pendelnd aufgehängt sind (Doppelpfeil E in Fig. 2). Im Bereich der unteren Umkehrräder 413 ist der Paternoster 41 mit einer von Führungsrollen 416, 417 gebildeten Auslenkung nach der vom Regalförderzeug 31 abgekehrten Seite hin versehen, die die Zugänglichkeit zur im Auslenkbereich befindlichen Gondel 412' entweder für die Entnahme der Gondel als Ganzes oder aber für die Entnahme von in der Gondel befindlichem, abgerufenem Lagergut 22 erleichtert. Auf der dem Regalförderzeug 31 zugekehrten Seite des Paternosters 41 ist ebenfalls eine Auslenkung vorgesehen, in diesem Fall in Gestalt von sich an vom Fahrwerk 411 des Paternosters 41 ausgehenden Führungssäulen 418 418' führenden Schlitten 419, 419', in denen die Förderketten 415, 415' in Richtung auf das Regalförderzeug 31 hin auslenkende Führungsrollen 420, 421, 422 gelagert sind. Die Auslenkschlitten 419 sind lösbar mit dem Hubtisch 313 des Regalförderzeuges 31 verbunden (52) und mit diesem, sich an den Bestandteil des Paternosters 41 bildenden Führungssäulen 418, 418' führend im Sinne des Doppelpfeiles C in Fig. 2 höhenverstellbar, so dass der an das Regalförderzeug 31 angekoppelte (51, 52) Paternoster 41 auf der dem Regalförderzeug 31 zugekehrten Seite stets im Niveau des Bestandteil des Regalförderzeuges 31 bildenden Hubtisches 313 ausgelenkt ist und somit in jeder Höhenlage des Hubtisches 313 die Bestandteil des Paternosters 41 bildende, in dieser Auslenkung befindliche Gondel 412'' vom Hubtisch 313 her zugänglich mit abgerufenem, aus auf dem Hubtisch 313 befindlichen Kassetten 21 entnehmbarem Lagergut 22 beladen werden kann. Mit 423 ist der Antrieb für den Paternoster 41 bezeichnet.

Da der als Arbeitsbühne dienende Hubtisch 313 nicht bis auf das Niveau der obersten Regalfächer überhoben werden kann, ist auf dem Hubtisch 313 ein die von dem Hubtisch 313 nicht mehr anfahrbaren Regalfächer abdeckender Fahrstuhl vorgesehen, in dessen auf dem Hubtisch aufgeständerten Fahrschacht 314 der Fahrkorb 315 im Sinne des Doppelpfeiles C' in Fig. 2 auf das Niveau der oberen Regalfächer überhoben und mit einer aus den Regalen entnommenen Kassette 21 wieder auf das Niveau des Hubtisches 313 abgesenkt werden kann.

Ein sich über den Hubtisch 313 erstreckendes Kragarmgerüst 316/317 dient einerseits der Lagerung einer Winde 318 für den Fahrkorb 315 und andererseits als Laufbahn für einen Greifer 319, mit dem Lagergut 22 aus einer auf dem Hubtisch 313 in Entnahmeposition befindlichen Kassette 21, gegebenenfalls nach einer Zwischenablage auf einer auf dem Hubtisch 313 noch vorgesehenen Waage 320, in die gerade in der vom Auslenkschlitten 419 gebildeten Auslenkung befindliche Gondel 412'' überhoben wird. Mit 424 ist ein vom Hubtisch 313 her zugängliches Schaltpult für den Paternoster 41 bezeichnet.

Dargestellt ist eine Lagereinrichtung zur Einlagerung von Langgut, das schliesst die Anwendung der neuen Kommissioniervorrichtung in Verbindung mit anderes Lagergut aufnehmenden Wabenregalanlagen nicht aus.

## Patentansprüche

1. Vorrichtung zur Zusammenstellung von Materialkommissionen aus in einer Wabenregalanlage eingelagertem Lagergut in Gestalt eines an einer Stirnseite des Regals (11, 11') an dem Regal entlang verfahrbaren Regalförderzeuges (31), auf dessen Hubtisch (313) die das Lagergut enthaltenden Kassetten (21) zur Materialentnahme überführt werden und eines an mindestens einer Stirnseite des Regalförderzeuges (31) mit dem Regalförderzeug (31) verfahrbaren Paternosters (41) mit einer Mehrzahl von Gondeln (412), dadurch gekennzeichnet, dass dem dem Regalförderzeug (31) zugekehrten Trum des Paternosters (41) zusammen mit dem Hubtisch (313) des Regalförderzeuges (31) höhenverstellbare, das Trum zum Hubtisch (313) hin auslenkende Auslenkschlitten (419, 419') zugeordnet sind.

2. Vorrichtung nach Anspruch 1, dadurch gekennzeichnet, dass der Paternoster (41) lösbar mit dem Regalförderzeug 31 verbunden ist und die Bestandteil des Paternosters (41) bildenden, sich an vom Fahrwerk (411) des Paternosters (41) ausgehenden Führungssäulen (418, 418') führenden Auslenkschlitten (419, 419') lösbar mit dem Hubtisch (313).

3. Vorrichtung nach einem der Ansprüche 1 oder 2, dadurch gekennzeichnet, das der Paternoster (41) an der vom Regalförderzeug (31) abgekehrten Seite im Bodenbereich mit einer lageunveränderlichen Auslenkung (416, 417) des Gegentrums versehen ist.

4. Vorrichtung nach einem der Ansprüche 1 bis 3, gekennzeichnet durch dem Paternoster (41) lösbar zugeordnete Gondeln (412).

5. Vorrichtung nach einem der Ansprüche 1 bis 4, dadurch gekennzeichnet, dass auf dem Hubtisch (313) ein die obersten, vom Hubtisch (313) selbst nicht anfahrbaren Regalfächer in der oberen Endlage des Hubtisches (313) abdeckender Fahrstuhl (314, 315) angeordnet ist.

## Revendications

1. Dispositif pour assortir des commandes de matériel emmagasiné dans des rayonnages à nid d'abeille, constitué sous forme d'un transporteur de rayonnage (31) pouvant se déplacer sur une face frontale du rayonnage (11, 11'), le long du rayonnage, sur le plateau de levage (313) duquel sont guidés les casiers (21) contenant le matériel, pour prélever celui-ci, et d'un pater-noster (41) comportant une pluralité de godets (412) pouvant se déplacer avec le transporteur (31) sur au moins une face frontale de celui-ci, caractérisé par le fait qu'au brin du paster-noster (41) tourné vers le transporteur (31) sont affectés, avec le plateau de levage du transporteur (313), des chariots de déviation réglables en hauteur (419, 419'), déviant le brin vers le plateau de levage (313).

2. Dispositif selon la revendication 1, caractérisé par le fait que le pater-noster (41) est relié de façon amovible avec le transporteur (31) et que les chariots de déviation (419, 419'), guidés sur des colonnes (418, 418') sortant du bâti de roulement (411) du pater-noster, (41), et faisant partie du pater-noster, sont reliés de façon amovible au plateau de levage (313).

3. Dispositif selon l'une des revendications 1 ou 2, caractérisé par le fait que le pater-noster (41) est pourvu du côté opposé au transporteur (31), dans sa zone inférieure, d'un agencement de déviation (416, 417) du brin opposé, dont la position est fixe.

4. Dispositif selon l'une des revendications 1 à 3, caractérisé par des godets (412) disposés de façon amovible sur le pater-noster.

5. Dispositif selon l'une des revendications 1 à 4, caractérisé par le fait que, sur le plateau de levage (313), est disposé un élévateur (314, 315) couvrant les rayons supérieurs qui ne peuvent être parcourus par le plateau (313) lui-même dans la position terminale supérieure du plateau (313).

## Claims

1. Device for assorting orders of material stored in honeycomb shelvings, said device being in the form of a shelf conveyor (31), which is displaceable along the shelf on one end face of the shelf (11, 11') and has a lifting table (313) to which the cassettes (21), which contain the stored material, are transferred for the removal of material, and said device being in the form of a paternoster (41) which has a plurality of carriers (412) and is displaceable with the shelf conveyor (31) on at least one end face of the shelf conveyor (31), characterised in that vertically adjustable deflector slides (419, 419') are associated with the section of the paternoster (41) facing the shelf conveyor (31), together with the lifting table (313) of the shelf conveyor (31), said slides deflecting the section towards the lifting table (313).

2. Device according to Claim 1, characterised in that the paternoster (41) is detachably connected to the shelf conveyor (31), and the deflector slides (419, 419'), which form a component part of the paternoster (41) and are guided on guide columns (418, 418') extending from the travel mechanism (411) of the paternoster (41), are detachably connected to the lifting table (313).

3. Device according to one of Claims 1 or 2, characterised in that the paternoster (41), on the end remote from the shelf conveyor (31), is provided in the base region with a non-displaceable deflection member (416, 417) for the opposed section.

4. Device according to one of Claims 1 to 3, characterised by carriers (412) detachably associated with the paternoster (41).

5. Device according to one of Claims 1 to 4, characterised in that a lift (314, 315), which covers the uppermost shelf compartments which cannot be reached by the lifting table (313) itself in the upper end position of the lifting table (313) is disposed on the lifting table (313).

Fig. 1

0 104 211

Fig. 2

0 104 211